# FASCICULE DE BREVET EUROPEEN

(11) **EP 0 521 806 B1**
(45) Date de publication et mention de la délivrance du brevet: **23.11.1994**
(21) Numéro de dépôt: 92440080.7
(22) Date de dépôt: 01.07.1992
(51) Int. Cl.: B27B 17/00, B27B 19/09, A01G 3/04

(54) **Outil motorisé portatif utilisable à deux mains, en particulier taille-haies**
Zweihand, motorbetriebenes Handgerät, insbesondere zum Beschneiden von Hecken
Motorised portable tool, used by both hands, in particular hedge trimmer

(30) Priorité: 02.07.1991 FR 9108630
(43) Date de publication de la demande: 07.01.1993
(73) Titulaire: OUTILS WOLF, S.à.r.l., 67160 Wissembourg (FR)
(72) Inventeur:
(74) Mandataire: Nuss, Pierre

(56) Documents cités:
- EP-A- 0 220 008
- EP-A- 0 267 472
- EP-A- 0 422 773
- DE-A- 3 509 638
- FR-A- 2 065 255
- GB-A- 531 403
- US-A- 3 949 817
- US-A- 4 841 641
- US-A- 4 924 571

## Description

La présente invention concerne le domaine de la fabrication d'outils à main motorisés, à entraînement par moteur thermique ou électrique, notamment les outils portatifs utilisables à deux mains, en particulier les taille-haies et a pour objet un tel outil motorisé.

Actuellement, les outils connus de ce type présentent généralement une poignée de commande disposée à l'arrière du moteur et une poignée de maintien disposée sensiblement à l'avant du moteur, à proximité de l'outil, avec interposition d'un dispositif de protection et de sécurité et s'étendant partiellement autour dudit moteur suivant une direction sensiblement perpendiculaire à celle de l'outil.

Les poignées arrière actuelles sont disposées sensiblement en alignement avec l'outil et solidaires du carter du moteur, de sorte qu'en cas de rotation de l'ensemble de l'outil motorisé autour d'un axe longitudinal passant par la poignée arrière, la position naturelle d'utilisation de cette dernière n'est plus assurée, ce qui occasionne rapidement une fatigue conséquente du poignet et du bras de l'utilisateur.

En outre, ces outils connus présentent un poids relativement élevé et, lors du travail, en particulier suivant des positions en hauteur ou à la verticale, l'ensemble du poids de l'outil est reporté directement dans les mains de l'utilisateur avec une répercussion néfaste au niveau des diverses articulations, ce qui entraîne une fatigue rapide et importante.

On connaît également, par DE-A-3 509 638, un outil motorisé portatif utilisable à deux mains pourvu d'un dispositif annexe de transfert de charge qui s'étend derrière la poignée arrière de commande, le dispositif annexe de transfert de charge se présentant sous forme d'un accoudoir solidarisé avec le carter du moteur du taille-haies, de manière rigide ou réglable en position angulaire autour dudit carter.

Le dispositif de transfert de charge selon ce document ne permet, cependant, pas une adaptation en position autour de l'axe longitudinal de l'outil.

La présente invention a pour but de pallier ces inconvénients.

Elle a, en effet, pour objet un outil motorisé portatif utilisable à deux mains, en particulier taillehaies, pourvu d'un dispositif annexe de transfert de charge qui s'étend derrière la poignée arrière de commande, le dispositif annexe de transfert de charge se présentant avantageusement sous forme d'un accoudoir solidarisé avec le carter du moteur du taille-haies, de manière rigide ou réglable en position angulaire autour dudit carter, caractérisé en ce que la fixation du dispositif sur le carter est assurée par un moyen de montage glissant serré sur le carter ou contre un élément de ce dernier, de forme correspondante, avec possibilité de déplacement autour de l'axe longitudinal de l'ensemble de l'outil motorisé et de réglage en position autour de cet axe.

L'invention sera mieux comprise grâce à la description ci-après, qui se rapporte a un mode de réalisation préféré, donné à titre d'exemple non limitatif, et expliqué avec référence aux dessins schématiques annexés, dans lesquels :
la figure 1 est une vue en élévation latérale d'un outil conforme à l'invention ;
la figure 2 est une vue analogue à celle de la figure 1 d'une variante de réalisation de l'invention ;
la figure 3 est une vue en plan, partiellement en coupe, de l'outil suivant la figure 2, et
la figure 4 est une vue en coupe, à plus grande échelle, de l'articulation du dispositif de transfert de charge de l'outil suivant les figures 2 et 3.

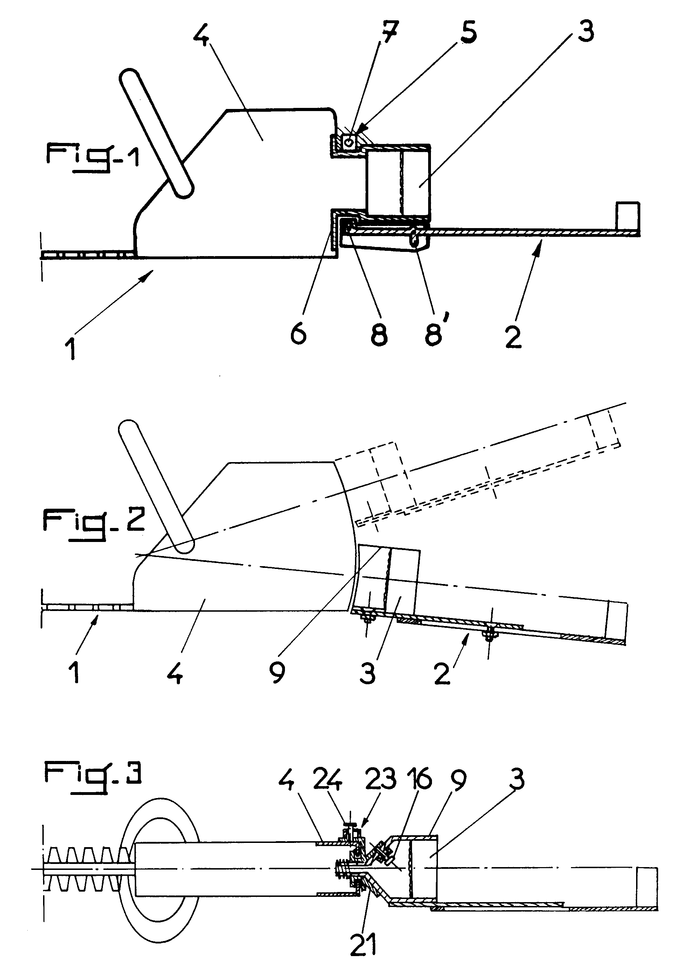

Conformément à l'invention, et comme le montre plus particulièrement, à titre d'exemple, la figure 1 des dessins annexés, l'outil motorisé portatif utilisable à deux mains, en particulier un taille-haies 1, qui est pourvu d'un dispositif annexe 2 de transfert de charge qui s'étend derrière la poignée arrière de commande 3, le dispositif annexe 2 de transfert de charge se présentant avantageusement sous forme d'un accoudoir solidarisé avec le carter 4 du moteur du taille-haies 1, de manière rigide ou réglable en position angulaire autour dudit carter 4, est caractérisé en ce que la fixation du dispositif 2 sur le carter 4 est assurée par un moyen de montage glissant 5 serré sur le carter 4 ou contre un élément de ce dernier, de forme correspondante, avec possibilité de déplacement autour de l'axe longitudinal de l'ensemble de l'outil motorisé et de réglage en position autour de cet axe.

Ce dispositif 2 en forme d'accoudoir peut être réglable en longueur et se présenter sous forme de deux éléments télescopiques, superposés ou adjacents, serrés l'un contre l'autre au moyen de vis ou analogues, ou bloqués l'un relativement à l'autre par un dispositif à pression, à encliquetage ou à coopération de forme, ou sous forme d'une coque monobloc, ou encore sous forme d'une poutre pourvue à sa partie arrière d'un support incurvé destiné à coopérer avec le coude de l'utilisateur, ledit support pouvant être guidé dans une glissière ou analogue de ladite poutre et être réglable en position sur la poutre au moyen de vis ou analogues ou par tout autre moyen de bloquage et pouvant être réglé en position par rapport à la poutre au moyen d'une rotule ou analogue.

Selon une caractéristique de l'invention, le dispositif 2 peut être complété à sa partie arrière par une sangle à fermeture rapide destinée à enserrer l'avant-bras de l'utilisateur à proximité du coude. Un tel mode de réalisation permet d'assurer un maintien supplémentaire de l'avant-bras contre le dispositif 2. Ce dernier, du fait de sa fixation sur le carter 4, assure, lors de l'utilisation, un transfert partiel de la charge représentée par l'ensemble de l'outil motorisé sur l'avant-bras de l'utilisateur, de sorte que les sollicitations au niveau des articulations et en particulier de l'articulation du poignet, sont atténuées.

La fixation du dispositif 2 sur le carter 4 peut être assurée par simple vissage ou boulonnage de son extrémité avant sur ledit carter 4, ou par clippage, ou encore par réalisation de ce dispositif 2 d'une seule pièce avec ledit carter 4. Un tel mode de réalisation permet l'obtention d'un outil motorisé pourvu, dans sa partie arrière, d'un accoudoir fixe soulageant l'utilisateur pendant le travail.

Comme le montre la figure 1, la fixation du dispositif 2 sur le carter 4 peut également être assurée par un moyen de montage glissant 5 serré sur le carter 4 ou contre un élément de ce dernier, de forme correspondante, avec possibilité de déplacement autour de l'axe longitudinal de l'ensemble de l'outil motorisé et de réglage en position autour de cet axe.

Le moyen de montage glissant 5 peut être réalisé sous forme d'une bague fendue coopérant avec un guidage cylindrique 6 prévu sur le carter 4 en avant de la poignée de commande 3 ou sous forme d'un disque annulaire coopérant avec un disque annulaire solidaire dudit carter 4, la bague fendue ou le disque annulaire étant solidaires de l'extrémité avant du dispositif 2.

Le moyen de montage glissant 5 est avantageusement réglable et bloqué en position au moyen d'une ou de plusieurs vis de serrage 7, de cames (non représentées), ou analogues, ou encore au moyen d'un dispositif d'encliquetage manoeuvrable par un bouton ou un levier.

Conformément à une autre caractéristique de l'invention, pour tenir compte des différents angles d'utilisation de l'ensemble de l'outil et afin d'assurer toujours un appui du dispositif 2 contre l'avant-bras de l'utilisateur, la fixation du dispositif 2, directement sur le carter 4 ou sur le moyen 5 de montage glissant, peut être réalisée avec possibilité de réglage en position angulaire par rapport à l'axe longitudinal de l'ensemble de l'outil 1 au moyen d'une articulation de pivotement 8 et d'un dispositif 8′ de guidage et d'assujettissement en position. Un tel dispositif 8 peut avantageusement se présenter sous forme d'une rainure curviligne, prévue sur le carter 4 ou sur un élément solidaire de ce dernier et coopérant avec une vis solidaire du dispositif 2 et bloquant ce dernier en position. En outre, l'axe de pivotement 8 peut, de préférence, être constitué sous forme d'un axe démontable.

Une telle réalisation du dispositif 2 permet une adaptation ergonomique à chaque utilisateur, avec un débattement angulaire important et, en outre, son repliement contre l'outil motorisé en position de rangement afin d'obtenir une longueur réduite et donc un moindre encombrement. De plus, la possibilité de démontage de l'axe 7 permet un détachement du dispositif 2 facilitant également son rangement ainsi que son emballage et permettant une utilisation dudit dispositif 2 comme accessoire disponible séparément.

Conformément à une variante de réalisation de l'invention non représentée aux dessins annexés, le dispositif 2 peut être combiné avec une poignée de commande 3 montée sur le carter 4 du moteur de manière rotative par rapport à l'axe longitudinal de l'outil. La poignée de commande 3 peut avantageusement être guidée et bloquée sur le carter 4 suivant des surfaces planes, coniques ou sphériques avec prévision d'un dispositif de blocage à encliquetage, à serrage ou à friction sous charge d'au moins un ressort manoeuvrable par came ou autre. La prévision d'une telle poignée rotative 3 permet une adaptation ergonomique améliorée, la poignée 3 pouvant rester constamment dans une position optimale par rapport au poignet de l'utilisateur, le dispositif 2 restant dans une position fixe ou étant également réglable.

Selon une autre variante de réalisation de l'invention, le dispositif 2 et la poignée 3 peuvent être combinés en un ensemble mobile par rapport au carter 4 du moteur. Un tel mode de réalisation est représenté plus particulièrement aux figures 2 à 4 des dessins annexés.

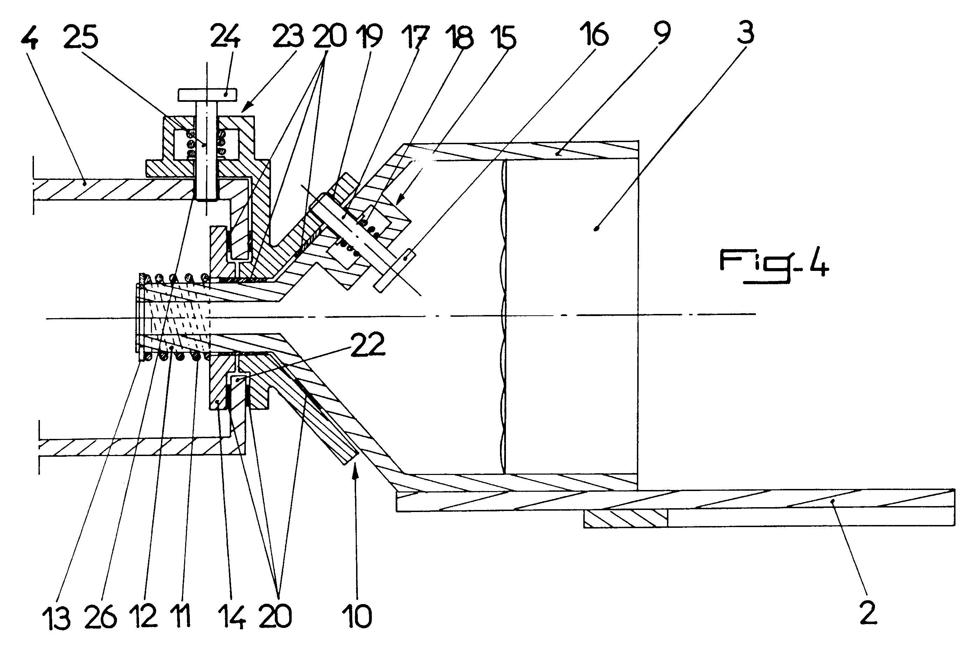

A titre d'exemple, la poignée de commande 3 est solidaire d'un support 9, guidé en rotation sur le carter 4 et portant le dispositif 2, ledit support 9 étant muni d'un moyen 10 de réglage en position sur ledit carter 4. Le guidage du support 9 sur le carter 4 peut être un guidage cylindrique, plat, conique ou sphérique, un ressort 11 monté sur un arbre central 12 du support 9 et s'appuyant, d'une part, sur une bague 13 ou analogue de ce dernier et, d'autre part, sur une pièce d'appui 14 à l'intérieur du carter 4, assurant l'assemblage entre ledit support 9 et le carter 4 (figure 4).

Le moyen 10 de réglage en position du support 9 sur le carter 4 se présente avantageusement sous forme d'un dispositif 15 d'encliquetage constitué par un bouton 16 solidaire d'un ergot 17 et manoeuvrable ou non à partir de la poignée 3 contre l'action d'un ressort 18, ledit ergot 17 coopérant avec des perçages 19 prévus à intervalles réguliers, sur la paroi de guidage du carter 4. Grâce à un tel moyen 10, il est possible, sans lâcher la poignée 3, de modifier la position de cette dernière et du dispositif 2 de transfert de charge par rapport à l'axe longitudinal de l'ensemble de l'outil.

Le moyen 10 de réglage en position du support 9 peut également être réalisé sous forme d'un dispositif à frottement ou à crans coopérants, dans lequel le ressort 11 monté sur l'arbre central 12 assure un blocage par frottement ou par coopération des crans, ce blocage pouvant être interrompu par action sur ledit ressort 11 au moyen d'une came ou analogue (non représentée).

Le moyen 10 peut également être réalisé sous forme d'une vis de serrage solidaire du support 9 ou du carter 4, guidé dans une rainure circulaire du carter 4 ou du support 9 et serrant les surfaces en contact desdits carter 4 et support 9, l'une contre l'autre après réglage.

Le dispositif 2 peut être fixé rigidement au support 9 ou être relié à ce dernier avec possibilité de réglage, au moyen d'un axe de pivotement 7, démontable ou non et d'un dispositif 8 de guidage et d'assujettissement en position. Ainsi, il est possible d'assurer une prise parfaitement ergonomique de l'outil motorisé, ou taille-haies, au niveau de la poignée de commande 3, avec transfert de charge sur l'avant-bras de l'utilisateur, son poignet restant continuellement dans une position naturelle par rapport à l'avant-bras, de sorte que les sollicitations désagréables et la fatigue sont réduites à un minimum.

La prévision du moyen de réglage 10 permet une rotation angulaire de l'ensemble support 9 - dispositif 2 de plus ou moins 180 ° autour de l'axe longitudinal de l'outil, cette rotation pouvant être réalisée au cours du travail sans nécessiter un relâchement de la poignée de commande 3.

Selon une caractéristique de l'invention, le guidage du support 9 sur et dans le carter 4 peut être effectué avec interposition de joints d'isolation 20 amortissants ou absorbants. De tels joints 20 assurent, outre un guidage aisé des surfaces des pièces en contact, une absorption partielle des vibrations, de sorte que le confort d'utilisation de l'outil est sensiblement amélioré.

Les figures 2 à 4 des dessins annexés représentent une autre variante de réalisation de l'invention, dans laquelle le dispositif annexe 2 de transfert de charge et la poignée de commande 3 sont montés, au moyen d'un coulisseau 21, de manière mobile dans un élément de guidage 22 sur le carter 4 et sont bloqués en position de service au moyen d'un dispositif 23 agissant directement sur le carter 4 ou sur l'élément de guidage 22.

L' élément 22 peut avantageusement se présenter sous forme d'une glissière s'étendant dans le plan vertical de l'outil motorisé (perpendiculaire au plan des lames du taille-haies) et incurvé dans ce plan et le dispositif 23 peut être constitué soit par un verrou mécanique 24 chargé par un ressort 25 et coopérant avec des trous de forme correspondante 26 prévus à intervalles réguliers sur le carter 4, soit par un dispositif de serrage chargé par ressort et actionné par une came ou analogue (non représentée) coopérant directement avec les bords de la glissière de guidage 22 et commandée à partir de la poignée de commande 3.

Un tel mode de réalisation permet une adaptation de la poignée 3 et du dispositif 2 à des configurations de travail spéciales, c'est-à-dire dans lesquelles l'outil doit être positionné selon des angles sortant de l'ordinaire, tout en permettant une utilisation aisée avec un risque de fatigue minimal.

Conformément à une caractéristique de l'invention, le coulisseau 21 peut être relié à la poignée de commande 3 et au dispositif 2 par l'intermédiaire d'un support 9 de guidage en rotation et d'un moyen 10 de réglage en position. Ces support 9 et moyen 10 ont été décrits plus haut avec référence à la figure 4 des dessins annexés. De même, le dispositif 2 peut être monté sur le support 9 de manière rigide ou mobile. Ces diverses possibilités permettent une adaptation parfaite de l'ensemble ainsi constitué à toutes les utilisations d'un outil motorisé à main.

Enfin, le coulisseau 21 peut avantageusement être réalisé d'une seule pièce avec le support 9, son montage sur le carter 4 étant assuré par la pièce d'appui 14 du support 9 fixée au coulisseau 21 par vissage ou mobile par rapport à ce dernier, en vue d'un blocage par serrage, le serrage étant effectué au moyen de vis ou analogues ou au moyen d'un ressort agissant sur la pièce 14 et actionné, dans le sens du déblocage par une came ou analogue, le ressort de charge pouvant être le ressort 11 prévu sur l'arbre central 12 du support 9.

Selon une variante de réalisation de l'invention, non représentée aux dessins annexés, le coulisseau 21 peut se présenter sous forme d'un élément sphérique et l'élément de guidage 22 sous forme d'un logement sphérique correspondant ménagé dans le carter 4, la liaison entre le coulisseau 21 et le carter 4 étant réalisée au moyen d'un dispositif de serrage à ressort, manoeuvré par came ou analogue, ou par vis ou autre. Un tel dispositif de liaison est connu en soi, en particulier dans le domaine de réalisation de rotules, et n'est pas décrit en détail.

Un tel mode de réalisation permet un déplacement de l'ensemble poignée 3 et dispositif 2 dans toutes les directions, en particulier hors du plan vertical de l'outil motorisé, notamment dans une position oblique par rapport à ce plan et ainsi une adaptation à des situations très particulières.

Conformément à une autre variante de réalisation de l'invention, non représentée aux dessins annexés, le support 9 de guidage en rotation de la poignée 3 et du dispositif 2 sur le carter 4, peut être relié à ce dernier au moyen d'un dispositif intermédiaire de pivotement, pouvant être bloqué en position et dont l'axe de pivotement s'étend dans le plan vertical de l'outil, perpendiculairement à son axe longitudinal. Le dispositif intermédiaire de pivotement est réalisé, de préférence, par un axe solidaire du carter 4 et coopérant avec un étrier solidaire du support 9, ledit étrier étant muni d'un moyen d'indexage en position à serrage, à encliquetage, ou analogue.

Un tel mode de réalisation permet une adaptation de la position de la poignée et de l'accoudoir par rapport à l'outil pour un travail dans une configuration particulière.

Selon une autre caractéristique de l'invention, non représentée aux dessins annexés, la poignée de commande 3 peut être montée sur le carter 4 de manière mobile en pivotement dans le plan vertical de l'outil motorisé, par guidage coulissant dans des logements de forme correspondante du carter 4, des butées de fin de course limitant les déplacements de ladite poignée et un moyen de blocage en position de cette dernière, par serrage, par adhérence sous pression, par encliquetage ou par coopération de forme, pouvant être prévu. Une telle poignée mobile permet une adaptation à la position naturelle du poignet, en particulier dans le cas d'une modification de l'angle d'appui du dispositif 2 de transfert de charge formant accoudoir. Enfin, selon une autre caractéristique de l'invention, le dispositif 2 formant accoudoir est pourvu, de préférence, d'un revêtement rembourré. Un tel revêtement est destiné à améliorer le confort d'utilisation.

La liaison entre les moyens de commande prévus dans la poignée 3 et le moteur à commander disposé à l'intérieur du carter 4 est effectuée, de manière connue, au moyen de câbles ou autres circuits de commande pouvant être dirigés dans ledit carter 4, de manière connue par des passages creux prévus au niveau des différents guidages.

Suivant une autre caractéristique de l'invention, non représentée aux dessins annexés, le dispositif 2 peut avantageusement être pourvu de moyens de guidage et de maintien de câbles électriques d'alimentation, intégrés dans le corps du dispositif 2 ou disposés sur la face inférieure dudit dispositif 2.

Grâce à l'invention, il est possible de réaliser un outil motorisé portatif utilisable à deux mains, en particulier un taille-haies, mais également tous autres outils de ce type, tels que tronçonneuses à chaîne ou à disque, meuleuses, etc..., pouvant être utilisé dans des positions très diverses tout en assurant une ergonomie de travail optimale.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Outil motorisé portatif utilisable à deux mains, en particulier taille-haies, pourvu d'un dispositif annexe (2) de transfert de charge qui s'étend derrière la poignée arrière de commande (3), le dispositif annexe (2) de transfert de charge se présentant avantageusement sous forme d'un accoudoir solidarisé avec le carter (4) du moteur du taille-haies (1), de manière rigide ou réglable en position angulaire autour dudit carter (4), caractérisé en ce que la fixation du dispositif (2) sur le carter (4) est assurée par un moyen de montage glissant (5) serré sur le carter (4) ou contre un élément de ce dernier, de forme correspondante, avec possibilité de déplacement autour de l'axe longitudinal de l'ensemble de l'outil motorisé et de réglage en position autour de cet axe.

2. Outil, suivant la revendication 1, caractérisé en ce que le moyen de montage glissant (5) est réalisé sous forme d'une bague fendue coopérant avec un quidage cylindrique (6) prévu sur le carter (4) en avant de la poignée de commande (3) ou sous forme d'un disque annulaire coopérant avec un disque annulaire solidaire dudit carter (4) la bague fendue ou le disque annulaire étant solidaires de l'extrémité avant du dispositif (2).

3. Outil, suivant la revendication 1, caractérisé en ce que le moyen de montage glissant (5) est avantageusement réglable et bloqué en position au moyen d'une ou de plusieurs vis de serrage (7), de cames ou analogues, ou encore au moyen d'un dispositif d'encliquetage manoeuvrable par un bouton ou un levier.

4. Outil, suivant l'une quelconque des revendications 1 à 3, caractérisé en ce que la fixation du dispositif (2) directement sur le carter (4) ou sur le moyen (5) de montage glissant, est réalisée avec possibilité de réglage en position angulaire par rapport à l'axe longitudinal de l'ensemble de l'outil (1) au moyen d'une articulation de pivotement (8) et d'un dispositif (8') de guidage et d'assujettissement en position.

5. Outil, suivant la revendication 4, caractérisé en ce que le dispositif (8') se présente avantageusement sous forme d'une rainure curviligne, prévue sur le carter (4) ou sur un élément solidaire de ce dernier et coopérant avec une vis solidaire du dispositif (2) et bloquant ce dernier en position.

6. Outil, suivant la revendication 4, caractérisé en ce que l'axe de pivotement (8) est, de préférence, constitué sous forme d'un axe démontable.

7. Outil, suivant l'une quelconque des revendications 1 à 6, caractérisé en ce que le dispositif (2) est combiné avec une poignée de commande (3) montée sur le carter (4) du moteur de manière rotative par rapport à l'axe longitudinal de l'outil.

8. Outil, suivant la revendication 7, caractérisé en ce que la poignée de commande (3) est avantageusement guidée et bloquée sur le carter (4) suivant des surfaces planes, coniques ou sphériques avec prévision d'un dispositif de blocage à encliquetage, à serrage ou à friction sous charge d'au moins un ressort manoeuvrable par came ou autre.

9. Outil, suivant l'une quelconque des revendications 7 et 8, caractérisé en ce que le dispositif (2) et la poignée (3) sont combinés en un ensemble mobile par rapport au carter (4) du moteur.

10. Outil, suivant la revendication 9, caractérisé en ce que la poignée de commande (3) est solidaire d'un support (9), guidé en rotation sur le carter (4) et portant le dispositif (2), ledit support (9) étant muni d'un moyen (10) de réglage en position sur ledit carter (4).

11. Outil, suivant la revendication 10, caractérisé en ce que le guidage du support (9) sur le carter (4) est un guidage cylindrique, plat, conique ou sphérique, un ressort (11) monté sur un arbre central (12) du support (9) et s'appuyant, d'une part, sur une bague (13) ou analogue de ce dernier et d'autre part, sur une pièce d'appui (14) à l'intérieur du carter (4), assurant l'assemblage entre ledit support (9) et le carter (4).

12. Outil, suivant l'une quelconque des revendications 10 et 11, caractérise en ce que le moyen (10) de réglage en position du support (9) sur le carter (4) se présente avantageusement sous forme d'un dispositif (15) d'encliquetage constitué par un bouton (16) solidaire d'un ergot (17) et manoeuvrable ou non à partir de la poignée (3) contre l'action d'un ressort (18), ledit ergot (17) coopérant avec des perçages (19) prévus à intervalles réguliers, sur la paroi de guidage du carter (4).

13. Outil, suivant l'une quelconque des revendications 10 et 11, caractérisé en ce que le moyen (10) de réglage en position du support (9) est réalisé sous forme d'un dispositif à frottement ou à crans coopérants, dans lequel le ressort (11) monté sur l'arbre central (12) assure un blocage par frottement ou par coopération des crans ce blocage pouvant être interrompu par action sur ledit ressort (11) au moyen d'une came ou analogue.

14. Outil, suivant l'une quelconque des revendications 10 et 11, caractérisé en ce que le moyen (10) est réalisé sous forme d'une vis de serrage solidaire du support (9) ou du carter (4), guidé dans une rainure circulaire du carter (4) ou du support (9) et serrant les surfaces en contact desdits carter (4) et support (9), l'une contre l'autre après réglage.

15. Outil, suivant l'une quelconque des revendications 10 à 14, caractérisé en ce que le dispositif (2) est fixé rigidement au support (9) ou est relié a ce dernier avec possibilité de réglage, au moyen d'un axe de pivotement (8), démontable ou non et d'un dispositif (8') de guidage et d assujettissement en position.

16. Outil, suivant l'une quelconque des revendications 10 à 14, caractérisé en ce que le guidage du support (9) sur et dans le carter (4) est effectué avec interposition de joints d'isolation (20) amortissants et/ou absorbants.

17. Outil, suivant l'une quelconque des revendications 1, 4, 7 et 9, caractérisé en ce que le dispositif annexe (2) de transfert de charge et la poignée de commande (3) sont montés, au moyen d'un coulisseau (21), de manière mobile dans un élément de guidage (22) sur le carter (4) et sont bloqués en position de service au moyen d'un dispositif (23) agissant directement sur le carter (4) ou sur l'élément de guidage (22).

18. Outil, suivant la revendication 17, caractérisé en ce que l'élément (22) se présente avantageusement sous forme d'une glissière s'étendant dans le plan vertical de l'outil motorisé (perpendiculaire au plan des lames du taille-haies et incurvé dans ce plan et le dispositif (23) est constitué soit par un verrou mécanique (24) chargé par un ressort (25) et coopérant avec des trous de forme correspondante (26) prévus à intervalles réguliers sur le carter (4), soit par un dispositif de serrage chargé par ressort et actionné par une came ou analogue coopérant directement avec les bords de la glissière de guidage (22) et commandée à partir de la poignée de commande (3).

19. Outil, suivant l'une quelconque des revendications 10 à 14 et la revendication 17, caractérisé en ce que le coulisseau (21) est relié à la poignée de commande (3) et au dispositif (2) par l'intermédiaire d'un support (9) de guidage en rotation et d'un moyen (10) de réglage en position.

20. Outil, suivant l'une quelconque des revendications 10 à 14 et la revendication 17, caractérisé en ce que le coulisseau (21) est avantageusement réalisé d'une seule pièce avec le support (9), son montage sur le carter (4) étant assuré par la pièce d'appui (14) du support (9) fixée au coulisseau (21) par vissage ou mobile par rapport à ce dernier, en vue d'un blocage par serrage, le serrage étant effectué au moyen de vis ou analogues ou au moyen d'un ressort agissant sur la pièce (14) et actionné, dans le sens du déblocage par une came ou analogue, le ressort de charge pouvant être le ressort (11) prévu sur l'arbre central (12) du support (9).

21. Outil, suivant la revendication 17, caractérisé en ce que le coulisseau (21) se présente sous forme d'un élément sphérique et l'élément de guidage (22) sous forme d'un logement sphérique correspondant ménagé dans le carter (4), la liaison entre le coulisseau (21) et le carter (4) étant réalisée au moyen d'un dispositif de serrage à ressort manoeuvré par came ou analogue, ou par vis ou autre.

22. Outil, suivant l'une quelconque des revendications 10 à 14, caractérisé en ce que le support (9) de guidage en rotation de la poignée (3) et du dispositif (2) sur le carter (4), peut être relié à ce dernier au moyen d'un dispositif intermédiaire de pivotement, pouvant être bloqué en position et dont l'axe de pivotement s'étend dans le plan vertical de l'outil, perpendiculairement à son axe longitudinal.

23. Outil, suivant la revendication 22, caractérisé en ce que le dispositif intermédiaire de pivotement est réalisé de préférence par un axe solidaire du carter (4) et coopérant avec un étrier solidaire du support (9), ledit étrier étant muni d'un moyen d'indexage en position à serrage, à encliquetage, ou analogue.

24. Outil, suivant l'une quelconque des revendications 1, 2, 7 à 10, 12, 17 à 19 et 22, caractérisé en ce que la poignée de commande (3) est montée sur le carter (4) de manière mobile en pivotement dans le plan vertical de l'outil motorisé, par guidage coulissant dans des logements de forme correspondante du carter (4), des butées de fin de course limitant les déplacements de ladite poignée et un moyen de blocage en position de cette dernière, par serrage, par adhérence sous pression, par encliquetage ou par coopération de forme, étant prévu.

## Claims

1. Motorised portable tool, used by both hands, in particular hedge trimmer, provided with a load-transferring attachment (2) extending behind the rear control handle (3), the load-transferring attachment (2) advantageously having the form of a rail connected to the housing (4) of the hedge trimmer motor (1) rigidly or adjustably in angular position round said housing (4), characterised in that the attachment (2) is fixed on the housing (4) by a sliding assembly means (5) clamped on the housing (4) or against an element thereof of corresponding shape with the possibility of displacement round the longitudinal axis of the motorised tool unit and of adjustment in position round this axis.

2. Tool according to Claim 1, characterised in that the sliding assembly means (5) is produced in the form of a split ring co-operating with a cylindrical guide (6) provided on the housing (4) in front of the control handle (3) or in the form of an annular disc co-operating with an annular disc connected to said housing (4), the split ring or the annular disc being connected to the front end of the attachment (2).

3. Tool according to Claim 1, characterised in that the sliding assembly means (5) is advantageously adjustable and locked in position by means of one or more locking screws (7), cams or the like or again by means of a catch device which is maneouvrable by a button or a lever.

4. Tool according to any one of Claims 1 to 3, characterised in that the attachment (2) is fixed directly on the housing (4) or on the sliding assembly means (5) with the possibility of adjustment in angular position relative to the longitudinal axis of the tool assembly (1) by means of a pivot articulation (8) and a device (8') for guidance and fixing in position.

5. Tool according to Claim 4, characterised in that the device (8') advantageously has the form of a curved groove provided in the housing (4) or an element connected thereto and co-operating with a screw connected to the attachment (2) and locking it in position.

6. Tool according to Claim 4, characterised in that the pivot pin (8) preferably has the form of a removable pin.

7. Tool according to any one of Claims 1 to 6, characterised in that the attachment (2) is combined with a control handle (3) mounted on the motor housing (4) so as to rotate relative to the longitudinal axis of the tool.

8. Tool according to Claim 7, characterised in that the control handle (3) is advantageously guided and locked on the housing (4) along the flat, conical or spherical surfaces with provision of a catch-type, clamp-type or friction-type locking device loaded by at least one cam-controlled or other spring.

9. Tool according to any one of Claims 7 and 8, characterised in that the attachment (2) and the handle (3) are combined in a unit which is movable relative to the motor housing (4).

10. Tool according to Claim 9, characterised in that the control handle (3) is connected to a support (9) rotatably guided on the housing (4) and carrying the attachment (2), said support (9) being equipped with a means (10) for adjustment in position on said housing (4).

11. Tool according to Claim 10, characterised in that the guidance of the support (9) on the housing (4) is cylindrical, flat, conical or spherical guidance, a spring (11) mounted on a central shaft (12) of the support (9) and resting, on the one hand, on a ring (13) or the like thereof and, on the other hand, on a supporting member (14) inside the housing (4) producing the join between said support (9) and the housing (4).

12. Tool according to any one of Claims 10 and 11, characterised in that the means (10) for adjustment in position of the support (9) on the housing (4) advantageously has the form of a catch device (15) consisting of a button (16) connected to a peg (17) and manoeuvrable or not by the handle (3) against the action of a spring (18), said peg (17) co-operating with perforations (19) provided at regular intervals on the guiding wall of the housing (4).

13. Tool according to any one of claims 10 and 11, characterised in that the means (10) for adjustment in position of the support (9) is produced in the form of a friction device or a device with mating notches in which the spring (11) mounted on the central shaft (12) ensures locking by friction or by mating of the notches, this locking optionally being interrupted by action upon said spring (11) by means of a cam or the like.

14. Tool according to any one of claims 10 and 11, characterised in that the means (10) is produced in the form of a clamping screw connected to the support (9) or to the housing (4) guided in a circular groove in the housing (4) or in the support (9) and clamping the contacting surfaces of said housing (4) and support (9) against one another after adjustment.

15. Tool according to any one of claims 10 to 14, characterised in that the attachment (2) is rigidly fixed to the support (9) or is connected to it with the possibility of adjustment by means of a pivot pin (8) which is removable or non-removable and of a device (8') for guidance and fixing in position.

16. Tool according to any one of claims 10 to 14, characterised in that the support (9) is guided on and in the housing (4) with interposition of damping and/or absorbing insulating joints (20).

17. Tool according to any one of claims 1, 4, 7 and 9, characterised in that the load-transferring attachment (2) and the control handle (3) are mounted by means of a slider (21) movably in a guide element (22) on the housing (4) and are locked in the service position by means of a device (23) acting directly on the housing (4) or on the guide element (22).

18. Tool according to claim 17, characterised in that the element (22) advantageously has the form of a slider extending in the vertical plane of the motorised tool (perpendicular to the plane of the hedge trimmer blades and incurvate in this plane) and the device (23) consists either of a mechanical bolt (24) loaded by a spring (25) and co-operating with holes of corresponding shape (26) provided at regular intervals on the housing (4) or of a spring-loaded clamping device actuated by a cam or the like co-operating directly with the edges of the guide slider (22) and controlled by the control handle (3).

19. Tool according to any one of claims 10 to 14 and claim 17, characterised in that the slider (21) is connected to the control handle (3) and to the attachment (2) by means of a rotatable guiding support (9) and a means (10) for adjustment in position.

20. Tool according to any one of claims 10 to 14 and claim 17, characterised in that the slider (21) is advantageously produced integrally with the support (9), its mounting on the housing (4) being ensured by the supporting member (14) of the support (9) fixed to the slider (21) by screwing or movable relative thereto for the purpose of locking by clamping, clamping being carried out by means of screws or the like or by means of a spring acting on the member (14) and actuated, in the unlocking direction, by a cam or the like, the loading spring optionally being the spring (11) provided on the central shaft (12) of the support (9).

21. Tool according to claim 17, characterised in that the slider (21) has the form of a spherical element and the guide element (22) the form of a corresponding spherical recess made in the housing (4), the slider (21) being linked to the housing (4) by means of a spring-loaded clamping device manoeuvred by a cam or the like or by a screw or other means.

22. Tool according to any one of claims 10 to 14, characterised in that the support (9) for rotatable guidance of the handle (3) and of the attachment (2) on the housing (4) may be connected to the housing by means of an intermediate pivot device capable of being locked in position and of which the pivot pin extends in the vertical plane of the tool perpendicularly to its longitudinal axis.

23. Tool according to claim 22, characterised in that the intermediate pivot device is preferably produced by a pin connected to the housing (4) and co-operating with a stirrup connected to the support (9), said stirrup being equipped with a clamp-type, catch-type or similar means for indexing in position.

24. Tool according to any one of claims 1, 2, 7 to 10, 12, 17 to 19 and 22, characterised in that the control handle (3) is mounted on the housing (4) so as to pivot in the vertical plane of the motorised tool by sliding guidance in recesses of corresponding shape in the housing (4), end of travel stops limiting the displacements of said handle and a means for the locking in position thereof by clamping, by adhesion under pressure, by catching or by mating in shape, being provided.

## Patentansprüche

1. Tragbares Motorwerkzeug für Zweihand-Betrieb, insbesondere Heckenschere, mit einer Lastübertragungs-Zusatzvorrichtung (2) versehen, die sich auf der Rückseite einer hinteren Betätigungs-Handhabe (3) erstreckt, wobei die Lastübertragungs-Zusatzvottichtung (2) vorteilhafterweise als Armstütze ausgebildet ist, die mit dem Motorgehäuse (4) der Heckenschere (1) starr oder mit veränderbarer Winkelstellung in Bezug auf das Gehäuse (4) fest verbunden ist, dadurch gekennzeichnet, dass die Befestigung der Vorrichtung (2) am Gehäuse (4) durch eine Gleitverbindung (5) gewährleistet ist, die gegen das Gehäuse (4) oder ein Bauteil desselben von entsprechender Gestalt gespannt ist, wobei die Möglichkeit einer Verstellung um die Längsachse des Motorwerkzeugs als Ganzes und einer Lageregelung um diese Achse besteht.

2. Werkzeug nach Anspruch 1, dadurch gekennzeichnet, dass die Gleitverbindung (5) als ein mit einer vor der Betätigungs-Handhabe (3) auf dem Gehäuse (4) vorgesehenen zylindrischen Führung (6) zusammenwirkender Schlitzring oder als eine mit einer mit dem Gehäuse (4) fest verbundenen Ringscheibe zusammenwirkende Ringscheibe ausgebildet ist, wobei der Schlitzring oder die Ringscheibe mit dem vorderen Endstück der Vorrichtung (2) fest verbunden ist.

3. Werkzeug nach Anspruch 1, dadurch gekennzeichnet, dass die Gleitverbindung (5) mittels einer oder mehrerer Blockierschrauben (7), mittels Nocken o.ä. oder auch mittels eines über Knopf oder Hebel betätigbaren Schaltwerks in ihrer Lage verstellbar und blockierbar ist.

4. Werkzeug nach einem der Ansprüche 1 bis 3, dadurch gekennzeichnet, dass die Befestigung der Vorrichtung (2) direkt am Gehäuse (4) oder an der Gleitverbindung (5) so ausgebildet ist, dass die Winkelstellung in Bezug auf die Längsachse des Werkzeugs (1) als Ganzes mittels eines Schwenkgelenks (8) und einer Führungs- und Lagefixier-Einrichtung (8') verstellbar ist.

5. Werkzeug nach Anspruch 4, dadurch gekennzeichnet, dass die Vorrichtung (8') vorteilhafterweise als gekrümmte Nut am Gehäuse (4) oder an einem mit diesem fest verbundenen Bauteil ausgebildet ist und mit einer mit der Vorrichtung (2) fest verbundenen Schraube zusammenwirkt, welche die Vorrichtung (2) in ihrer Stellung blockiert.

6. Werkzeug nach Anspruch 4, dadurch gekennzeichnet, dass die Schwenkachse (8) vorzugsweise Von einer ausbaubaren Achse gebildet ist.

7. Werkzeug nach einem der Ansprüche 1 bis 6, dadurch gekennzeichnet, dass die Vorrichtung (2) mit einer Betätigungs-Handhabe (3) kombiniert ist, die am Motorgehäuse (4) in Bezug auf die Längsachse des Werkzeugs drehbar angeordnet ist.

8. Werkzeug nach Anspruch 7, dadurch gekennzeichnet, dass die Betätigungs-Handhabe (3) am Gehäuse (4) vorteilhafterweise über ebene, kegelige oder sphärische Flächen geführt und blockiert ist, mit Bereitstellung einer einrastenden, Hemmenden oder einer von wenigstens einer über eine Nocke o.ä. betätigbaren Feder vorgespannten kraftschlüssigen Blockiervorrichtung.

9. Werkzeug nach einem der Ansprüche 7 und 8, dadurch gekennzeichnet, dass die Vorrichtung (2) und die Handhabe (3) zu einer in Bezug auf das Motorgehäuse (4) beweglichen Baugruppe kombiniert sind.

10. Werkzeug nach Anspruch 9, dadurch gekennzeichnet, dass die Betätigungs-Handhabe (3) mit einem am Gehäuse (4) drehbar geführten und die Vorrichtung (2) tragenden Halter (9) fest verbunden ist, der mit einer Einrichtung (10) zur Lageverstellung auf dem Gehäuse (4) versehen ist.

11. Werkzeug nach Anspruch 10, dadurch gekennzeichnet, dass die Führung für den Halter (9) am Gehäue (4) eine Rund-, Flach-, Konus- oder Kugelführung ist, wobei eine Feder (11), die auf einem Mittelschaft (12) des Halters (9) angeordnet ist und sich einerseits an einem Ring (13) o.ä. des Halters (9) und andererseits an einem Abstützteil (14) im Innern des Gehäuses (4) abstützt, den Zusammenhalt zwischen dem Halter (9) und dem Gehäuse (4) gewährleistet.

12. Werkzeug nach einem der Ansprüche 10 und 11, dadurch gekennzeichnet, dass die Einrichtung (10) zur Lageverstellung des Halters (9) auf dem Gehäuse (4) vorteilhafterweise als Gesperre (15) ausgebildet ist, das von einem mit einem Vorsprung (17) fest verbundenen Bolzen (16) gebildet ist und von der Handhabe (3) aus gegen die Wirkung einer Feder (18) betätigbar sein kann, wobei der Vorsprung (17) mit Bohrungen (19) zusammenwirkt, die mit regelmässigen Zwischenabständen in die Führungswand des Gehäuses (14) eingearbeitet sind.

13. Werkzeug nach einem der Ansprüche 10 und 11, dadurch gekennzeichnet, dass die Einrichtung (10) zur Lageverstellung des Halters (9) in Form einer reibschlüssig oder einer über miteinander zusammenwirkende Rasten wirkenden Vorrichtung ausgebildet ist, bei der die auf dem Mittelschaft (12) angeordnete Feder (11) eine Blockierung durch Reibung oder durch Zusammenwirken des Rasten gewährleistet, wobei diese Blockierung durch Betätigen der Feder (11) mittels einer Nocke o.ä. aufgehoben werden kann.

14. Werkzeug nach einem der Ansprüche 10 und 11, dadurch gekennzeichnet, dass die Einrichtung (10) in Form einer Klemmschraube ausgebildet ist, die mit dem Halter (9) oder mit dem Gehäuse (4) fest verbunden ist, in einer kreisrunden Nut des Gehäuses (4) oder des Halters (9) geführt ist und nach Verstellung die Berührungsflächen des Gehäuses (4) und des Halters (9) aneinanderpresst.

15. Werkzeug nach einem der Ansprüche 10 bis 14, dadurch gekennzeichnet, dass die Vorrichtung (2) am Halter (9) starr befestigt oder mit ihm mittels einer ausbaubaren oder nicht ausbaubaren Schwenkachse (8) und einer Führungs- und Lagefixier-Einrichtung (8') verstellbar verbunden ist.

16. Werkzeug nach einem der Ansprüche 10 bis 14, dadurch gekennzeichnet, dass die Führung des Halters (9) auf und im Gehäuse (4) unter Zwischenschaltung von dämpfenden und/oder absorbierenden isolierenden Verbindungsstellen (20) ausgeführt ist.

17. Werkzeug nach einem der Ansprüche 1, 4, 7 und 9, dadurch gekennzeichnet, dass die Lastübertragungs-Zusatzvorrichtung (2) und die Betätigungs-Handhabe (3) mittels eines Gleitstücks (21) in einem Führungsteil (22) auf dem Gehäuse (4) beweglich angeordnet sind und in der Betriebsstellung mittels einer Einrichtung (23) blockiert sind, die auf das Gehäuse (4) oder auf das Führungsteil (22) direkt einwirkt.

18. Werkzeug nach Anspruch 17, dadurch gekennzeichnet, dass das Führungsteil (22) vorteilhafterweise als Gleitbahn ausgebildet ist, die sich in der senkrechten (zur Messerebene der Heckenschere rechtwinkligen) Ebene des Motorwerkzeugs erstreckt und in dieser Ebene gekrümmt ist, und die Einrichtung (23) entweder von einen, mechanischen Riegel (24) gebildet ist, der durch eine Feder (25) vorgespannt ist und mit Löchern (26) von entsprechender Gestalt zusammenwirkt, die mit regelmässigen Zwischenabständen in das Gehäuse (4) eingearbeitet sind, oder von einer federbelasteten Klemmeinrichtung gebildet ist, die durch eine Nocke o.ä. betätigt wird, welche mit den Rändern der Führungsgleitbahn (22) direkt zusammenwirkt und von der Betätigungs-Handhabe (3) her betätigbar ist.

19. Werkzeug nach einem der Ansprüche 10 bis 14 und 17, dadurch gekennzeichnet, dass das Gleitstück (21) mit der Betätigungs-Handhabe (3) und mit der Vorrichtung (2) über einen drehführbaren Halter (9) und eine Lageverstell-Einrichtung (10) verbunden ist.

20. Werkzeug nach einem der Ansprüche 10 bis 14 und 17, dadurch gekennzeichnet, dass das Gleitstück (21) vorteilhafterweise in einem Stück mit dem Halter (9) ausgebildet ist, wobei seine Anordnung auf dem Gehäuse (4) durch das Abstützteil (14) des Halters (9) vorgenommen ist, das am Gleitstück (21) mit Schrauben befestigt oder in Bezug auf es beweglich angeordnet ist, um eine Klemmblockierung zu erzielen, die mittels Schrauben o.ä. oder mittels einer auf das Abstützteil (14) wirkenden Feder, die zur Aufhebung der Blockierung mittels einer Nocke o.ä. betätigt wird, ausgeübt wird, wobei die Vorspannfeder die auf dem Mittelschaft (12) des Halters (9) vorgesehene Feder (11) sein kann.

21. Werkzeug nach Anspruch 17, dadurch gekennzeichnet, dass das Gleitstück (21) als kugelförmiges Bauteil und das Führungsteil (22) als entsprechende, in das Gehäuse (4) eingearbeitete Kugelaufhahme ausgebildet sind, wobei die Verbindung zwischen dem Gleitstück (21) und dem Gehäuse (4) als federbelastete Klemmeinrichtung, die mittels Nocke o.ä. betätigbar ist, oder in Form von Schrauben o.ä. ausgebildet ist.

22. Werkzeug nach einem der Ansprüche 10 bis 14, dadurch gekennzeichnet, dass der drehführbare Halter (9) der Handhabe (3) und der Vorrichtung (2) auf dem Gehäuse (4) mit letzterem mittels einer zwischengeschalteten Schwenkeinrichtung verbunden ist, welche in ihrer Stellung blockierbar ist und deren Schwenkachse sich in der senkrechten Ebene des Werkzeugs, rechtwinklig zu seiner Längsachse, erstreckt.

23. Werkzeug nach Anspruch 22, dadurch gekennzeichnet, dass die zwischengeschaltete Schwenkeinrichtung vorzugsweise als Achse ausgebildet ist, die mit dem Gehäuse (4) fest verbunden ist und mit einem mit dem Halter (9) fest verbundenen Bügel zusammenwirkt, der mit einer Stellungsverriegelung durch Klemmung, Einrasten o.ä. ausgestattet ist.

24. Werkzeug nach einem der Ansprüche 1, 2, 7 bis 10, 12, 17 bis 19 und 22, dadurch gekennzeichnet, dass die Betätigungs-Handhabe (3) am Gehäuse (4) schwenkbeweglich in der senkrechten Ebene des Motorwerkzeugs durch Gleitführung in Aufnahmen von entsprechender Gestalt im Gehäuse (4) angeordnet ist, wobei Wegbegrenzungsanschläge, welche die Bewegungen der Handhabe begrenzen, und eine Einrichtung für die Stellungsblockierung der Handhabe durch Klemmen, Presshaftung, Einrasten oder Formschluss vorgesehen sind.
